# EUROPEAN PATENT APPLICATION

(11) **EP 2 816 696 A1**
(43) Date of publication of application: **24.12.2014**
(21) Application number: 14164904.6
(22) Date of filing: 16.04.2014
(51) Int. Cl.: H02J 1/02, H04B 15/00, F02C 7/268, F02C 7/275

(54) **Systems and methods for inductively coupled damper for direct current power systems**

(30) Priority: 21.06.2013 US 201361838079 P; 07.03.2014 US 201414200543
(71) Applicant: Hamilton Sundstrand Corporation, Windsor Locks, CT 06096-1010 (US)
(72) Inventor: Duesterhoeft, Kurt W., Rockford, IL Illinois 61109 (US); Fordyce, Graham T., Rockford, IL Illinois 61107 (US)
(74) Representative: Hughes, Andrea Michelle

(57) **Abstract**

An electrical system for generating a reliable power source for starting an engine, including a first interface to a direct current power source 206 and a second interface to an inverter 210. The inverter is coupled to a generator 204, An inductive damper 208 is coupled to the direct current power source via the first interface and to the inverter via the second interface, The inductive damper comprises a primary winding 310, a secondary winding 312, and a resistor 314 coupled to the secondary winding. The inductive damper operates to galvanically isolate the resistor from the direct current power source during a startup operation of the generator. An associated method is also disclosed.

## Description

### CROSS-REFERENCE TO RELATED APPLICATIONS

This patent application claims priority to U.S. Provisional Application No. 61/838,079, filed June 21, 2013.

### GOVERNMENT SUPPORT

This invention was made with government support under Contract No. N00019-02-C-3002 awarded by the U.S. Air Force. The government has certain rights in the invention.

### FIELD

The present teachings relate to systems and methods for an inductively coupled damper for direct current power systems, and more particularly, to platforms and techniques for eliminating alternating current noise and other spurious components in power source signals supplied to an inverter used to drive an electrically powered generator, such as those used to start engines.

### BACKGROUND

In aircraft applications and others, the turning shaft of a jet engine or other power plant can be used to drive a generator to supply electrical power to the airframe. Various signal conditioning circuits can be used to achieve desired direct or alternative voltages for those types of applications. In addition, besides acting as a source for internal power, the main generator can also be used to start the engine during initial operation. To perform that additional role, the generator must be fed with a sufficient source of direct current power which is passed through an inverter to generate a compatible alternative current source to turn the power shaft of the engine.

However, when an inverter is coupled to a direct current power source, such as an onboard battery with sufficient current reserves, signal passing from the DC power source to the inverter can become affected or degraded by a host of spurious signal components. Some of that noise can be introduced by undesired or unpredicted resonant harmonics produced by the interaction of any of the power source, inverter, generator, and/or load. When those artifacts are severe enough, the engine control electronics may abort the engine starting sequence, or take other actions.

It may be desirable to provide methods and systems for an inductively coupled damper for direct current power systems, in which a generator coupled to the power shaft of an engine can be fed with reliable direct current power signals, to enable the generator to effectively and reliably start the attached engine.

### SUMMARY

Disclosed herein is an electrical system that includes a first interface to a direct current power source and a second interface to an inverter. The inverter is coupled to a generator. An inductive damper is coupled to the direct current power source via the first interface and to the inverter via the second interface. The inductive damper comprises a primary winding, a secondary winding, and a resistor coupled to the secondary winding. The inductive damper operates to galvanically isolate the resistor from the direct current power source during a startup operation of the generator.

Also disclosed herein is a method of inductively damping a power source. A source current is received from a direct current power source. The current passes through an inductive damper to a generator. The inductive damper comprises a primary winding, a secondary winding, and a resistor coupled to the secondary winding. The inductive damper operates to galvanically isolate the resistor from the direct current power source during a startup operation of the generator;

### BRIEF DESCRIPTION OF THE DRAWINGS

The accompanying drawings, which are incorporated in and constitute a part of this specification, illustrate embodiments of the present teachings and together with the description, serve to explain the principles of the present teachings. In the figures:
FIG. 1 illustrates an overall configuration of an electrical power system which can be implemented in systems and methods for an inductively coupled damper for direct current power systems, according to various embodiments;
FIG. 2 illustrates an electrical power system configured to produce start power for a coupled engine, according to various embodiments; and
FIG. 3 illustrates components of an inductive damper which can be used in aspects of systems and methods for an inductively coupled damper for direct current power systems, according to various embodiments.

### DETAILED DESCRIPTION

Embodiments of the present teachings relate to systems and methods for an inductively coupled damper for direct current power systems. More particularly, embodiments relate to platforms and techniques for configuring a power system for aircraft or other applications, in which signals from a DC power source can be conditioned to reduce or eliminate spurious harmonics and other signal artifacts, for purposes of using an onboard generator to supply power to a power shaft and begin an engine start-up sequence.

Reference will now be made in detail to exemplary embodiments of the present teachings, which are illustrated in the accompanying drawings. Where possible the same reference numbers will be used throughout the drawings to refer to the same or like parts.

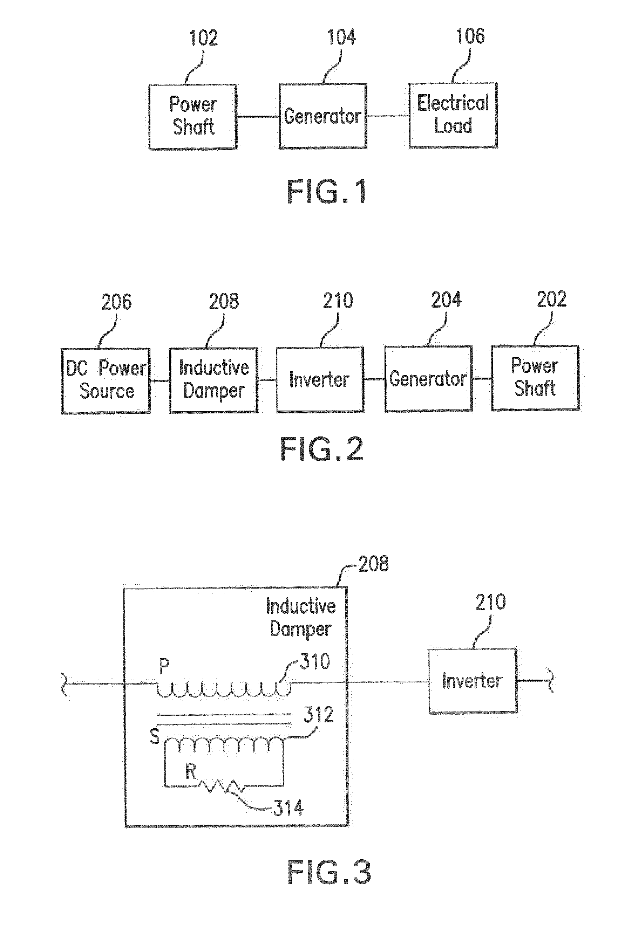

FIG. 1 illustrates aspects of a power system construction in which systems and methods for an inductively coupled damper for direct current power systems can operate, according to the present disclosure. In one example, a power shaft 102 is coupled to a generator 104. The power shaft 102 may comprise the drive shaft of the jet engine of an aircraft, whose torque turns the generator 104 to produce power in the form of alternating current. The power produced by the generator 104 can be communicated through various signal conditioning and protection circuits to an electrical load 106, which comprises the avionic and other electrical circuitry of the host aircraft or the like. In this fashion, the aircraft can be supplied with the necessary power requirements to operate controls, radar, navigation, and other electronic systems. It will be appreciated that while embodiments are described in which the power systems herein are incorporated in an aircraft or airframe, in some embodiments the same systems and techniques described herein can be incorporated in other vehicles or systems, such as, for example, ships or other vessels which employ a turbine engine to produce motive power and electrical power through an attached generator.

The generator 104 and associated circuitry can be configured to be powered by engine operation to deliver electrical power, and also to receive electrical power to turn the engine over during startup operation. As shown for instance in FIG. 2, a direct current (DC) power source 206 can be used to provide a DC power signal to an inductive damper 208. The DC power source 206 may comprise a battery, such as a battery configured to produce a 270V output. The inductive damper 208 is connected to an inverter 210 configured to convert the incoming DC power signal to an alternating current (AC) power signal for delivery to a generator 204. The generator 204 is itself coupled to power shaft 202, which may be the turbine shaft of a jet engine, or other engine or power plant. The power shaft 202 can be rotated by the generator 204 at torques and/or rotational speeds necessary to start an associated jet engine, or other engine or power plant.

The inductive damper 208 produces filtering or damping effects against unwanted spurious power harmonics, in part due to inductive coupling of the DC power source 206 to the inverter 210. An exemplary construction of the inductive damper 208 is shown in FIG. 3. As shown, the inductive damper 208 can incorporate a primary winding 310, as well as a secondary winding 312 through which the source power signal can be communicated to the inverter 210. The primary winding 310 and secondary winding 312 can be constructed around a magnetic core (not shown) of suitable magnetic material. The secondary winding 312 includes a resistor 314 coupled across the secondary winding 312. The inductive damper 208 provides galvanic isolation between the DC power source 206 and the inverter 210, thereby reducing or preventing spurious AC signals from entering the inverter 210. It will be appreciated that while resistor 314 is illustrated as a single resistive element, that element can, if desired, be implemented using multiple resistor parts in various topologies or connections. This overall arrangement offers minimum insertion loss to the DC components of the power signal, while providing significant impedance to the AC components.

Using the inductive damper 208, including the inductively coupled resistor 314, no direct or galvanic connection to the feed from the DC power source 206 is required so that the wire insulation itself provides all the dielectric value. Further, there is no additional resistance to the DC component on the feeder line, so that there is no additional dissipation. Moreover, by use of the turns ratio between the primary winding 310 and the secondary winding 312, the ohmic value and the operating current of the resistor 314 can achieve a desired dissipation, at a comparatively reduced weight of the overall system. Other advantages include the fact that under a short or other fault condition, the resistor 314 can be protected from overstress by the saturation characteristics of the magnetic core around which the primary winding 310 and secondary winding 312 are constructed, providing increased durability and robustness.

The foregoing description is illustrative, and variations in configuration and implementation may occur to persons skilled in the art. For example, while embodiments have been described in which a single inductive coupler 208 provides damping and protection to a single generator 204, in implementations, multiple inductive couplers can be combined in various serial or parallel configurations. Similarly, while the output of the inductive damper 208 is illustrated as being communicated to one inverter 210, in implementations, that output can be communicated to multiple inverters and/or other components. Other resources described as singular or integrated can in embodiments be plural or distributed, and resources described as multiple or distributed can in embodiments be combined. Further modifications may be made to adapt a particular situation or material to the teachings of the disclosure without departing from the essential scope thereof. Moreover, the use of the terms first, second, etc. , do not denote any order or importance, but rather the terms first, second, etc. are used to distinguish one element from another. Furthermore, the use of the terms a, an, etc. do not denote a limitation of quantity, but rather denote the presence of at least one of the referenced item. The scope of the present invention is accordingly intended to be limited only by the following claims.

## Claims

1. An electrical system, comprising:
a first interface to a direct current power source (206);
a second interface to an inverter (210), the inverter being coupled to a generator; and
an inductive damper (208), coupled to the direct current power source via the first interface and to the inverter via the second interface, the inductive damper comprising- a primary winding (310),
a secondary winding (312),
and a resistor (314) coupled to the secondary winding,
wherein the inductive damper operates to galvanically isolate the resistor from the direct current power source during a startup operation of the generator.

2. The system of claim 1, wherein generator is coupled to the power shaft (202) of an engine.

3. The system of claim 2, wherein the generator operates to start the engine using power received from the direct current power source via the inductive damper.

4. The system of claim 3, wherein the engine comprises a jet engine.

5. The system of claim 1, wherein the direct current power source comprises a direct current power source of 270 volts.

6. The system of claim 1, wherein the ohmic value of the resistor is determined based on a turns ratio of the primary winding and the secondary winding.

7. The system of claim 1, wherein the direct current power source comprises a battery.

8. The system of claim 1, wherein an inductance of the inductive damper provides an impedance to alternating current harmonics.

9. A method of inductively damping a power source, comprising: receiving a source current from a direct current power source; providing an inverter being coupled to a generator; and coupling an inductive damper to the direct current power source, the inductive damper comprising:
a primary winding,
a secondary winding, and
a resistor coupled to the secondary winding,
wherein the inductive damper operates to galvanically isolate the resistor from the direct current power source during a startup operation of the generator.

10. The method of claim 9, wherein generator is coupled to the power shaft of an engine.

11. The method of claim 10, wherein the generator operates to start the engine using power received from the direct current power source via the inductive damper.

12. The method of claim 11, wherein the engine comprises a jet engine.

13. The method of claim 9, wherein the direct current power source comprises a direct current power source of 270 volts.

14. The method of claim 9, wherein the ohmic value of the resistor is determined based on a turns ratio of the primary winding and the secondary winding.

15. The method of claim 9, wherein the direct current power source comprises a battery.
